# EUROPEAN PATENT APPLICATION

(11) **EP 4 412 299 A1**
(43) Date of publication of application: **07.08.2024**
(21) Application number: 21959280.5
(22) Date of filing: 28.09.2021
(51) Int. Cl.: H04W 28/04

(54) **TERMINAL AND WIRELESS COMMUNICATION METHOD**

(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2021/035733
(87) International publication number: WO 2023/053232

(57) **Abstract**

This terminal has a reception unit for receiving a first downlink signal and a retransmitted second downlink signal, and a control unit for controlling the deferring of transmission of a first acknowledgement for the first downlink signal and controlling the first acknowledgement deferred in a relationship with a second acknowledgement for the second downlink signal.

## Description

### Technical Field

The present disclosure relates to a terminal and a radio communication method.

### Background Art

Long Term Evolution (LTE) has been specified to further achieve a higher data rate and lower latency in a Universal Mobile Telecommunications System (UMTS) network. Successor systems of LTE have also been studied to further achieve a broader band and higher speed from LTE. The successor systems of LTE include, for example, systems called LTE-advanced (LTE-A), future radio access (FRA), 5th generation mobile communication system (5G), 5G plus (5G+), radio access technology (New-RAT), new radio (NR), and the like.

In NR, for example, enhancement of a feedback function from a terminal to a base station has been studied for improving communication quality (for example, Non Patent Literature 1).

Information fed back from a terminal to a base station is transmitted in a resource of physical uplink control channel (PUCCH). In terms of extension of the technology of ultra-reliable and low latency communications (URLLC) in Rel. 17 of 3GPP, a configuration method of a resource for transmitting an uplink control signal including the information to be fed back is studied. In 3GPP, it has been agreed to support semi-persistent scheduling (SPS) HARQ-ACK deferral (SPS HARQ-ACK deferring) in Rel-17.

In 3GPP, it has been agreed in Rel-16 to support reporting/feedback of HARQ-ACK by Type 3 HARQ-ACK codebook as a function of retransmitting HARQ-ACK bits of all HARQ process IDs. Further, in 3GPP, it has been agreed in Rel-17 to support enhanced Type 3 HARQ-ACK CB and one-shot triggering HARQ-ACK retransmission. Note that the enhanced Type 3 HARQ-ACK codebook is referred to as "e-Type 3 HARQ-ACK CB" below. In addition, the Type 3 HARQ-ACK CB other than the e-Type 3 HARQ-ACK CB, that is, legacy Type 3 HARQ-ACK CB specified in Rel-16 is simply referred to as "Type 3 HARQ-ACK CB". Further, the Type 3 HARQ-ACK CB and the e-Type 3 HARQ-ACK CB are collectively referred to as "(e)Type 3 HARQ-ACK CB".

### Citation List

### Non Patent Literature

NPL 1
"Enhanced Industrial Internet of Things (IoT) and ultra-reliable and low latency communication", RP-201310, 3GPP TSG RAN Meeting #86e, 3GPP, July 2020

### Summary of Invention

There is scope for further study on the SPS HARQ-ACK deferral taking into consideration a relationship with a HARQ-ACK retransmission function such as the (e)Type 3 HARQ-ACK CB and HARQ-ACK CB for retransmission based on one-shot triggering HARQ-ACK retransmission.

An aspect of the present disclosure facilitates providing a terminal capable of appropriately transmitting a deferred SPS HARQ-ACK taking into consideration a relationship with a HARQ-ACK bit to be retransmitted.

### Solution to Problem

A terminal according to an aspect of the present disclosure includes: a reception section that receives a first downlink signal and a second downlink signal that is retransmitted; and a control section that controls transmission deferral of first acknowledgement to the first downlink signal and the first acknowledgement deferred in a relationship with second acknowledgement to the second downlink signal.

A radio communication method according to an aspect of the present disclosure includes: receiving, by a terminal, a first downlink signal and a second downlink signal that is retransmitted; and controlling, by the terminal, transmission deferral of first acknowledgement to the first downlink signal and the first acknowledgement deferred in a relationship with second acknowledgement to the second downlink signal.

### Brief Description of Drawings

FIG. 1 is a diagram for describing a radio communication system in an embodiment;
FIG. 2 illustrates an exemplary configuration of the radio communication system when dual connectivity (DC) is performed;
FIG. 3 illustrates exemplary basic operations in the communication system in an embodiment;
FIG. 4 illustrates exemplary SPS HARQ-ACK deferral;
FIG. 5 is a diagram for describing an overview of Type 1 HARQ-ACK CB;
FIG. 6 is a diagram for describing an overview of Type 2 HARQ-ACK CB;
FIG. 7 is a diagram for describing an overview of Type 3 HARQ-ACK CB;
FIG. 8 illustrates an exemplary relationship between Type 3 HARQ-ACK CB and SPS HARQ-ACK deferral;
FIG. 9 illustrates an exemplary relationship between e-Type 3 HARQ-ACK CB and SPS HARQ-ACK deferral;
FIG. 10 illustrates an exemplary relationship between e-Type 3 HARQ-ACK CB and SPS HARQ-ACK deferral;
FIG. 11 illustrates an exemplary relationship between one-shot triggering HARQ-ACK retransmission and SPS HARQ-ACK deferral;
FIG. 12 is a block diagram illustrating an exemplary configuration of a base station according to the present embodiment;
FIG. 13 is a block diagram illustrating an exemplary configuration of a terminal according to the present embodiment; and
FIG. 14 illustrates an exemplary hardware configuration of the base station and the terminal according to the present embodiment.

### Description of Embodiments

Hereinafter, an embodiment according to an aspect of the present disclosure will be described in detail with reference to the accompanying drawings.

### (Embodiment)

In NR, downlink semi-persistent scheduling (SPS) is specified in which a resource of a physical downlink shared channel (PDSCH) is configured for a terminal in advance and activation/release is performed by downlink control information (DCI). SPS enables data reception with low latency.

When an uplink (UL) slot is placed after a plurality of consecutive downlink (DL) slots, the terminal possibly transmits, in the UL slot after the DL slots, acknowledgement (e.g., hybrid automatic repeat request-acknowledgement (HARQ-ACK)) corresponding to the data reception in the plurality of DL slots.

Note that, in the following description, PDSCH based on SPS may be referred to as SPS PDSCH, and acknowledgement to SPS PDSCH may be referred to as SPS HARQ-ACK.

In the present embodiment, a description will be given with an exemplary radio communication system in which an operation by SPS is allowed, SPS PDSCH is transmitted from a base station to a terminal, and an uplink control signal (e.g., signal of physical uplink control channel (PUCCH)) including SPS HARQ ACK is transmitted from the terminal to the base station.

### (System Configuration)

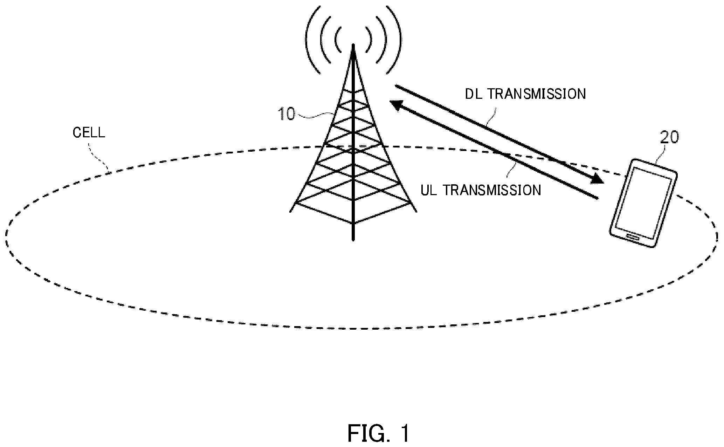

FIG. 1 is a diagram for describing a radio communication system in an embodiment of the present disclosure. The radio communication system in an embodiment of the present disclosure includes base station 10 and terminal 20 as illustrated in FIG. 1. Although FIG. 1 illustrates one each of base station 10 and terminal 20, it is an example and there may be a plurality of base stations 10 and terminals 20.

Base station 10 is a communication apparatus that provides one or more cells and performs radio communication with terminal 20. A physical resource for a radio signal is defined in time domain and frequency domain, in which the time domain may be defined by the number of OFDM symbols and the frequency domain may be defined by the number of subcarriers or the number of resource blocks. Further, a transmission time interval (TTI) in the time domain may be a slot or may be a subframe.

Base station 10 can perform carrier aggregation in which communication with terminal 20 is performed by bundling together a plurality of cells (e.g., a plurality of component carriers (CCs)). In the carrier aggregation, one primary cell (PCell) and one or more secondary cells (SCells) are used.

Base station 10 transmits a synchronization signal, system information, and the like to terminal 20. The synchronization signal is, for example, NR-PSS and NR-SSS. The system information is transmitted through, for example, NR-PBCH or PDSCH, and is also referred to as broadcast information. As illustrated in FIG. 1, base station 10 transmits a control signal or data to terminal 20 in downlink (DL) and receives a control signal or data from terminal 20 in uplink (UL). Here, a signal transmitted through a control channel such as PUCCH and PDCCH is referred to as a control signal, and a signal transmitted through a shared channel such as PUSCH and PDSCH is referred to as data, but what they are called is an example.

Terminal 20 is a communication apparatus having a radio communication function, such as a smartphone, a mobile phone, a tablet, a wearable terminal, and a machine-to-machine (M2M) communication module. As illustrated in FIG. 1, terminal 20 receives a control signal or data from base station 10 in DL and transmits a control signal or data to base station 10 in UL so as to utilize various communication services provided by the radio communication system. Note that terminal 20 may be referred to as UE, and base station 10 may be referred to as a gNB.

Terminal 20 can perform carrier aggregation in which communication with base station 10 is performed by bundling together a plurality of cells (a plurality of component carriers (CCs)). In the carrier aggregation, one PCell and one or more SCells are used. A PUCCH-SCell having PUCCH may also be used.

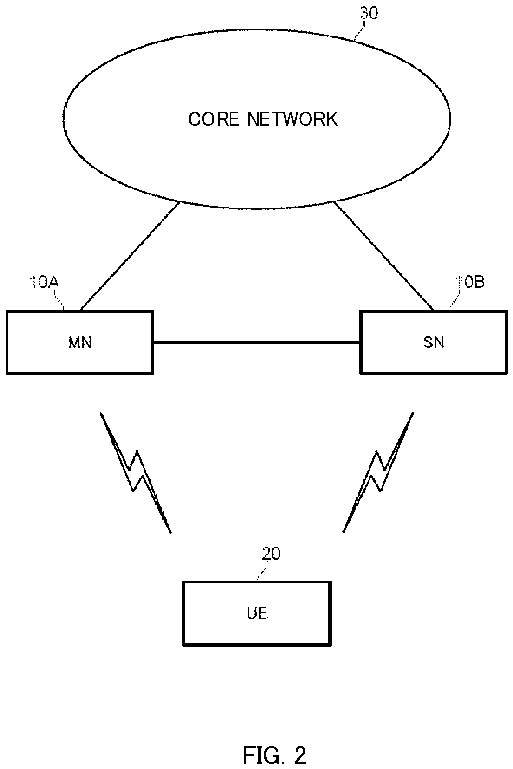

FIG. 2 illustrates an exemplary configuration of the radio communication system when dual connectivity (DC) is performed. As illustrated in FIG. 2, base station 10A, which serves as a master node (MN), and base station 10B, which serves as a secondary node (SN), are included. Base station 10A and base station 10B are each connected to a core network. Terminal 20 can communicate with both base station 10A and base station 10B.

A cell group provided by base station 10A, which serves as MN, is referred to as a master cell group (MGC), and a cell group provided by base station 10B, which serves as SN, is referred to as a secondary cell group (SCG). In DC, the MCG is composed of one PCell and one or more SCells, and the SCG is composed of one primary-SCell (PSCell) and one or more SCells.

Processing operations in the present embodiment may be performed by the system configuration illustrated in FIG. 1, by the system configuration illustrated in FIG. 2, or by a system configuration other than those.

### (Exemplary Basic Operations)

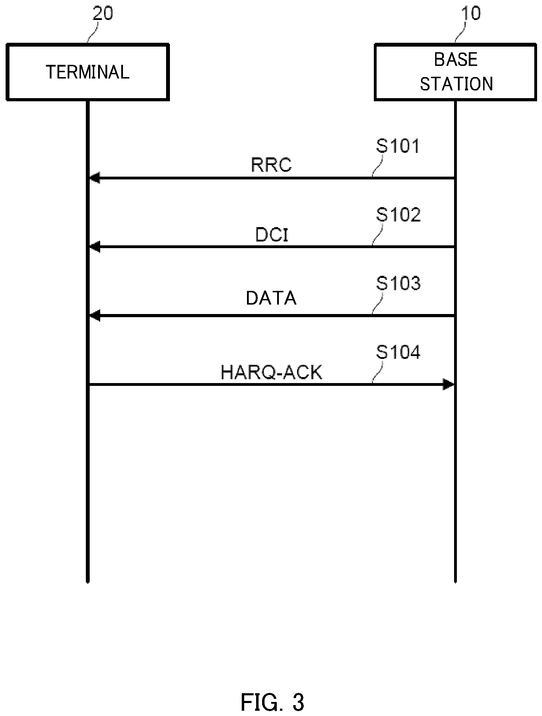

Exemplary basic operations in the communication system in an embodiment of the present invention will be described with reference to FIG. 3.

In S101, base station 10 transmits configuration information of downlink SPS, configuration information of a PUCCH resource, configuration information of a slot format, and the like to terminal 20 by radio resource control (RRC) signaling, and terminal 20 receives the configuration information. Note that the present embodiment is based on downlink SPS, and the "SPS" thus means downlink SPS hereinafter.

The slot format configuration information is, for example, tdd-UL-DL-ConfigurationCommom or tdd-UL-DL-ConfigurationDedicated, and this configuration information configures whether a TDD configuration in each symbol of each of one or more slots is downlink, uplink, or flexible. Hereinafter, this configuration information is referred to as semi-static TDD configuration information. In addition, downlink may be represented by "D", uplink may be represented by "U", and flexible may be represented by "F". Terminal 20 basically determines D/U/F in each symbol of each slot according to the semi-static TDD configuration information.

Further, a plurality of slot format candidates may be indicated as the configuration information in S 101 to enable a dynamic switch of the slot format. This configuration information is, for example, SlotFormatCombinationPerCell. This information is composed of ID(s) of the slot format (SF), and thus this is hereinafter referred to as SFI configuration information.

Terminal 20 receives DCI for activating an SPS configuration from base station 10 in S102, and receives data through a PDSCH resource according to the SPS configuration in S103. In S104, terminal 20 transmits SPS HARQ-ACK to base station 10 using a PUCCH resource of a slot in a time position specified by the DCI, which may be a PUSCH resource when UL scheduling is done. Note that the SPS HARQ-ACK may be simply referred to as "HARQ-ACK" in the following. In addition, the HARQ-ACK may be referred to as HARQ information, feedback information, or the like.

Terminal 20 sometimes receives DCI for dynamically specifying the slot format from base station 10 in S102 or before/after S102. This DCI is control information for specifying an ID to be actually used among IDs of the plurality of slot formats configured in the SFI configuration information. When the slot format is specified by this DCI, terminal 20 determines D/U/F in each symbol of each slot according to the slot format in place of the semi-static TDD configuration information. The information of this DCI is referred to as dynamic SFI specifying information (or dynamic SFI or SFI).

When SPS is configured, the position of a symbol where a PUCCH resource is configured may overlap with another symbol (e.g., semi-static DL symbol) depending on the TDD DL/UL configuration in a slot in a specified time position (configuration by the semi-static TDD configuration information or the dynamic SFI specifying information), so that HARQ-ACK cannot be transmitted.

3GPP has been discussing technologies for schemes called URLLC and Industrial Internet of Things (IIoT) in Rel. 17.

In URLLC, enhancement of a feedback function of a terminal for hybrid automatic repeat request-acknowledgement (HARQ-ACK) has been studied. The HARQ-ACK is exemplary information on a confirmation response (e.g., acknowledgement) to data received by the terminal. As exemplary enhancement of the function, SPS HARQ-ACK deferral described above will be discussed.

### <SPS HARQ-ACK deferral (SPS HARQ-ACK deferring)>

In 3GPP, it has been agreed to support SPS HARQ-ACK deferral in Rel-17. The following points have also been agreed in 3GPP in terms of SPS HARQ-ACK deferral.

When a PUCCH using "SPS-PUCCH-AN-List-r16" or "n1PUCCH-AN" overlaps with a semi-static DL or SSB symbol, SPS HARQ-ACK PUCCH (transmission of SPS HARQ-ACK) may be deferred.

Note that the "SPS-PUCCH-AN-List-r16" is included in information for configuring a parameter of a PUCCH resource to the terminal (e.g., PUCCH-Config). The "SPS-PUCCH-AN-List-r16" is exemplary information indicating a list of PUCCH resources for DL SPS HARQ-ACK. The "n1PUCCH-AN" is included in, for example, information used for configuring DL semi-persistent transmission (e.g., SPS-Config). The "n1PUCCH-AN" is exemplary information indicating a HARQ resource of PUCCH for DL SPS.

SPS HARQ-ACK deferral may be configured for each SPS configuration. Deferrable SPS HARQ-ACK to SPS PDSCH may be deferred.

The maximum deferral limitation may be configured for each SPS configuration. For example, a condition that "K1_max_def= K1 + K_def" does not exceed a limit (e.g., maximum deferral limitation) may be provided.

A slot in which deferred SPS HARQ-ACK may be transmitted is referred to as a target slot or a target PUCCH slot.

For example, the target slot is the first available slot in which a determined PUCCH resource does not overlap with an invalid symbol (e.g., semi-static DL or SSB symbol). The determined PUCCH resource may correspond to, for example, a PUCCH resource used for transmitting deferred SPS HARQ-ACK. The first available slot may be the earliest slot in the time direction.

Multiplexing of SPS HARQ-ACK and dynamic HARQ-ACK may be considered in determining the target slot.

When deferred SPS HARQ-ACK is not transmitted after the determination of the target PUCCH slot, transmission of the deferred SPS HARQ-ACK bit need not be further deferred. In this case, the deferred SPS HARQ-ACK may be dropped.

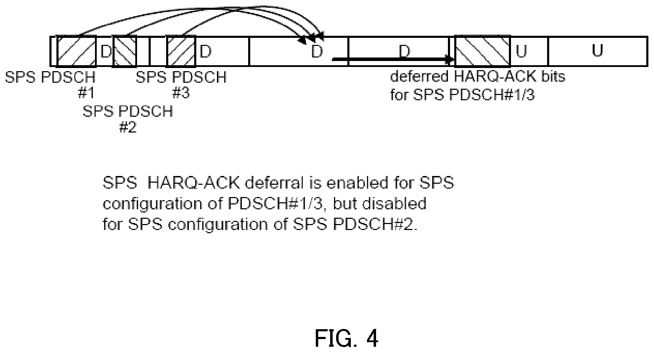

FIG. 4 illustrates exemplary SPS HARQ-ACK deferral. The horizontal axis in FIG. 4 represents the time axis. FIG. 4 illustrates six slots, by way of example. Note that, in the following description, a plurality of slots may be referred to as the first slot, the second slot, and so forth, in order from the oldest slot in time (from the left side of the drawing). The six slots are each labeled "D" or "U". A slot labeled "D" represents a DL slot, and a slot labeled "U" represents a UL slot. The first slot includes SPS PDSCH #1 and SPS PDSCH #2, and the second slot includes SPS PDSCH #3.

Here, a description will be given of an exemplary case where SPS HARQ-ACK deferral is enabled in the SPS configuration of SPS PDSCH #1 and SPS PDSCH #3 and disabled in the SPS configuration of SPS PDSCH #2, and SPS HARQ-ACK to each SPS PDSCH may be transmitted in the third slot. Note that the description "SPS HARQ-ACK may be transmitted in the third slot" may correspond to "information indicating a transmission slot of SPS HARQ-ACK indicates transmission in the third slot". In this case, SPS HARQ-ACK PUCCH is deferred because SPS HARQ-ACK overlaps with semi-static DL in the third slot.

A slot in which SPS HARQ-ACK to SPS PDSCH may be transmitted (the third slot in FIG. 4) is specified by parameter "K1". K1 indicates an offset from data (e.g., SPS PDSCH) to corresponding acknowledgement (e.g., SPS HARQ-ACK). In the case of FIG. 4, K1 = 2 is configured for SPS PDSCH #1 and K1 = 1 is configured for SPS PDSCH #3; accordingly, the third slot is indicated.

In the example of FIG. 4, the fifth slot corresponds to the first available slot (target slot) that does not overlap with an invalid symbol (e.g., semi-static DL or SSB symbol). Thus, HARQ-ACK bits (deferred HARQ-ACK bits) for SPS PDSCH #1 and SPS PDSCH #3 for which SPS HARQ-ACK deferral is enabled are transmitted in the target slot.

### <HARQ-ACK CB>

In 3GPP, enhancement of a HARQ-ACK feedback function by HARQ-ACK CB has been studied in terms of extension of URLLC technology. In 3GPP, HARQ-ACK CBs of Type 1 and Type 2 (hereinafter, sometimes abbreviated as "Type 1/2") have been specified. In Rel-16, it has also been agreed to support reporting/feedback of HARQ-ACK by Type 3 HARQ-ACK codebook as a function of retransmitting HARQ-ACK bits of all HARQ process IDs. Further, in 3GPP, e-Type 3 HARQ-ACK CB, which is an enhanced Type 3 HARQ-ACK CB, is specified in Rel-17. Terminal 20 may be indicated which type of HARQ-ACK CB to apply, for example, by higher layer signaling such as RRC. In the following, each type of HARQ-ACK CB will be briefly described.

### (Type 1 HARQ-ACK CB)

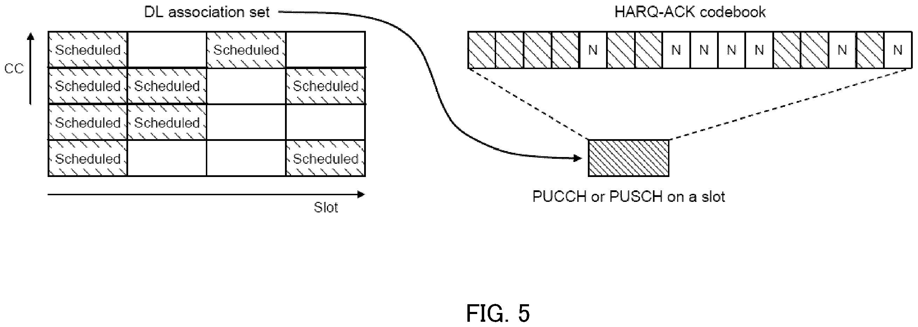

FIG. 5 is a diagram for describing an overview of the Type 1 HARQ-ACK CB. "Scheduled" illustrated in FIG. 5 indicates, for example, a slot scheduled by DCI. CC indicates component carriers.

In the Type 1 HARQ-ACK CB, terminal 20 generates a HARQ-ACK bit for PDSCH regardless of whether a scheduled slot (PDSCH) is present. For example, the terminal may configure NACK on unscheduled PDSCHs as illustrated in the "HARQ-ACK codebook" of FIG. 5.

### (Type 2 HARQ-ACK CB)

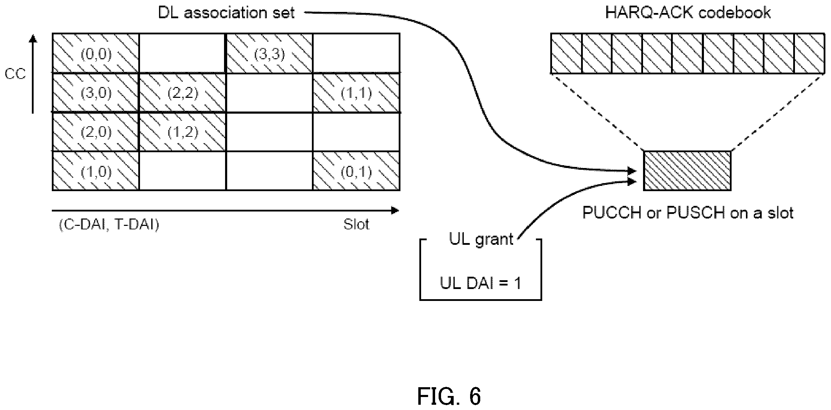

FIG. 6 is a diagram for describing an overview of the Type 2 HARQ-ACK CB. (x, y) illustrated in FIG. 6 indicates, for example, a slot scheduled by DCI. In FIG. 6, x corresponds to a C-DAI value and y corresponds to a T-DAI value. DAI is an abbreviation for a downlink assignment index. DAI indicates, for example, allocation of scheduled PDSCH where HARQ-ACK is bundled into HARQ-ACK CB.

In the Type 2 HARQ-ACK CB, terminal 20 generates a HARQ-ACK bit for the scheduled PDSCH. For example, terminal 20 may configure HARQ-ACK for the scheduled PDSCH as illustrated in the "HARQ-ACK codebook" of FIG. 6.

Note that the C-DAI is counted up from 1. In a case of a 2-bit field, for example, the C-DAI is repeated as 1 -> 2 -> 3 -> 0 ->... The C-DAI is counted up for DCI reception opportunity of each CC for each slot, and is counted up from the last value of the previous slot even when the slot changes. The T-DAI indicates the last value of the C-DAI in each slot.

### (Type 3 HARQ-ACK CB)

In 3GPP, it has been agreed to support Type 3 HARQ-ACK CB as a function of retransmitting HARQ-ACK bits of all HARQ-process IDs in Rel-16. The following points have also been agreed in 3GPP for the Type 3 HARQ-ACK CB.

Terminal 20 determines the Type-3 HARQ-ACK CB when "pdsch-HARQ-ACK-OneShotFeedback-r16" is provided. Terminal 20 multiplexes only the Type 3 HARQ-ACK CB in PUCCH or PUSCH for transmission in the slot.

When detecting a DCI format including a one-shot HARQ-ACK request field of value 1, terminal 20 determines PUCCH or PUSCH for multiplexing the Type 3 HARQ-ACK CB. The type 3 HARQ-ACK CB includes HARQ-ACK information of all configured HARQ processes of all configured serving cells. Terminal 20 assumes providing HARQ-ACK information in response to a request of the Type-3 HARQ-ACK CB, N symbols after the last symbol of PDCCH providing a DCI format.

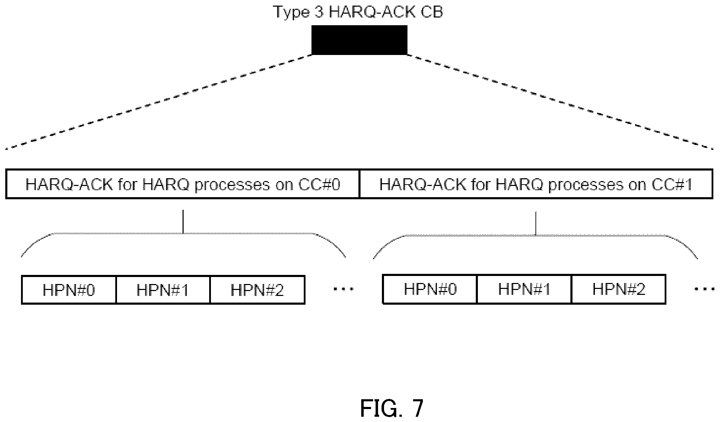

FIG. 7 is a diagram for describing an overview of the Type 3 HARQ-ACK CB. As illustrated in FIG. 7, in the Type 3 HARQ-ACK CB, HARQ-ACKs are first arranged in ascending order of HARQ process number (HPN) for each HARQ-ACK for a HARQ process on each CC. Then, HARQ-ACKs for HARQ processes on the respective CCs are arranged in ascending order of CC number.

### (e-Type 3 HARQ-ACK CB)

In 3GPP, it has been agreed to support e-Type 3 HARQ-ACK CB in Rel-17. The following points have also been agreed in 3GPP for the e-Type 3 HARQ-ACK CB.

The size of e-Type 3 HARQ-ACK CB is smaller than the size of Type 3 HARQ-ACK CB specified in Rel-16. The size of e-Type 3 HARQ-ACK CB is specified by a configuration of RRC.

The e-Type 3 HARQ-ACK CB is triggered by DCI 1_1 and DCI 1_2. Hereinafter, the e-Type 3 HARQ-ACK CB triggering DCI may be referred to as "e-Type 3 HARQ-ACK CB triggering DCI" or "triggering DCI".

In the e-Type 3 HARQ-ACK CB, one or more small CBs are configured by RRC. The triggering DCI indicates the configured small CB(s). The configured small CBs may each include a HARQ process for a subset of configured CCs or a subset of configured HARQ processes (specific to CC). Terminal 20 can transmit some subsets included in the e-Type 3 HARQ-ACK CB.

The e-Type 3 HARQ-ACK CB is constructed regardless of PHY priority. The triggering DCI indicates the PHY priority of PUCCH transmitting the e-Type 3 HARQ-ACK CB.

When a HARQ process cannot be mapped to the e-Type 3 HARQ-ACK CB, terminal 20 does not assume that the Type 1/2 HARQ-ACK CB is transmitted in the same slot as the e-Type 3 HARQ-ACK CB.

### <One-shot Triggering HARQ-ACK Retransmission>

In 3GPP, it has been agreed to support one-shot triggering HARQ-ACK retransmission by DL grant DCI as well as the e-Type 3 HARQ-ACK CB in Rel-17.

A single one-shot triggering DCI can trigger retransmission of only one HARQ-ACK CB. Terminal 20 does not assume a plurality of triggering DCIs indicating the same PUCCH slot for retransmission of HARQ-ACK CB of different slots. That is, only one HARQ-ACK CB/PUCCH occasion may be retransmitted in one PUCCH slot.

Note that, in RAN1#106-e, a "PUCCH slot offset" for indicating a HARQ-ACK CB/PUCCH occasion to be retransmitted was discussed, and two alternations were indicated. In the first alternation, the PUCCH slot offset defines an offset between the trigging DCI and a PUCCH slot for HARQ-ACK CB to be retransmitted. In the second alternation, the PUCCH slot offset defines an offset between a new PUCCH slot for transmission and a PUCCH slot for HARQ-ACK CB to be retransmitted.

### <Consideration>

As described above, in 3GPP, Type 1, Type 2, and (e)Type 3 HARQ-ACK CBs have been specified and agreed so far. It has also been agreed to support one-shot triggering HARQ-ACK retransmission as well as the e-Type 3 HARQ-ACK CB. However, SPS HARQ-ACK deferral taking into consideration a relationship with a HARQ-ACK retransmission function such as the (e)Type 3 HARQ-ACK CB and the HARQ-ACK CB for retransmission based on the one-shot triggering HARQ-ACK retransmission has not yet been specified, and there is scope for further study.

In terms of the above consideration, the following three proposals are presented in the present embodiment, and Cases, Options (sometimes abbreviated as "Opt."), Variations, and/or Alternations (sometimes abbreviated as "Alt.") of the respective proposals will be described.

### (Proposal 1)

In Proposal 1, a description will be given of a relationship between Type 3 HARQ-ACK CB report/feedback and the SPS HARQ-ACK deferral.

### (Option 1)

In Option 1, terminal 20 does not assume that the SPS HARQ-ACK deferral is valid in any SPS configuration, and at the same time, that triggering of the Type 3 HARQ-ACK CB is valid for any DCI format. Here, "valid" corresponds to "enabled". Note that, in Option 1, it is assumed that the SPS HARQ-ACK deferral and the triggering of the Type 3 HARQ-ACK CB are configured at the same time, but it is not necessary to assume that they are enabled at the same time.

In this case, base station 10 controls enabling/disabling of the SPS HARQ-ACK deferral or a transmission timing of the Type 3 HARQ-ACK CB triggering DCI etc. so that a PUCCH slot of the Type 3 HARQ-ACK CB and a target slot of the SPS HARQ-ACK deferral are not the same slot.

According to Option 1 of Proposal 1, terminal 20 eliminates the need for processing such as multiplexing of a deferred SPS HARQ-ACK bit and the Type 3 HARQ-ACK CB, thereby simplifying the operation (control) of terminal 20.

### (Option 2)

In Option 2, terminal 20 assumes that the SPS HARQ-ACK deferral is enabled in any SPS configuration, and at the same time, that the triggering of the Type 3 HARQ-ACK CB is enabled in any DCI format.

That is, terminal 20 assumes that, when a target slot for the deferral of an SPS HARQ-ACK bit is not determined before a PUCCH slot, the Type 3 HARQ-ACK CB is triggered to be reported in the PUCCH slot, and the deferred SPS HARQ-ACK bit is present in the PUCCH slot of the Type 3 HARQ-ACK CB.

In this case, terminal 20 multiplexes the deferred SPS HARQ-ACK bit and the Type 3 HARQ-ACK CB by appending the HARQ-ACK bit after the Type 3 HARQ-ACK CB, and transmits the Type 3 HARQ-ACK CB and the SPS HARQ-ACK bit in the PUCCH slot.

At this time, the SPS HARQ-ACK deferral is ended, and no further deferral is made for the deferred SPS HARQ-ACK bit.

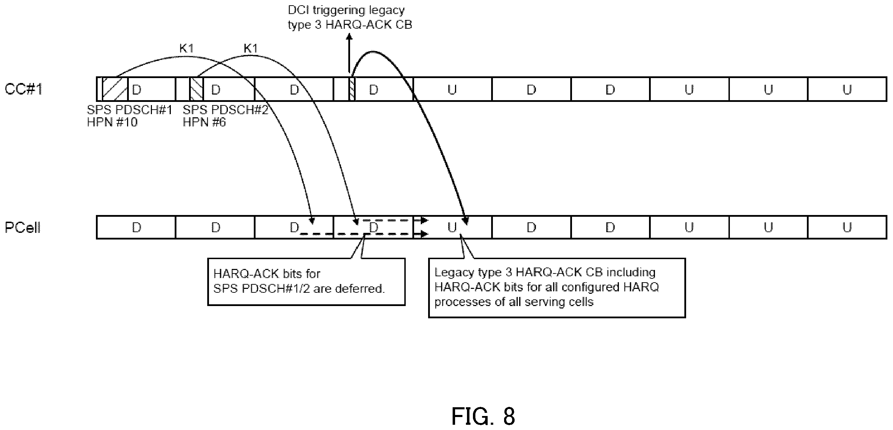

FIG. 8 illustrates an exemplary relationship between the Type 3 HARQ-ACK CB and the SPS HARQ-ACK deferral. The horizontal axis in FIG. 8 represents the time axis. FIG. 8 illustrates ten slots, by way of example. The ten slots are each labeled "D" or "U". A slot labeled "D" represents a DL slot, and a slot labeled "U" represents a UL slot. In the example of FIG. 8, in CC #1, the first slot includes SPS PDSCH #1 (HPN #10), the second slot includes SPS PDSCH #2 (HPN #6), and the fourth slot includes the Type 3 HARQ-ACK CB triggering DCI.

In the example of FIG. 8, it is assumed that a PUCCH slot of the Type 3 HARQ-ACK CB specified by the triggering DCI is the fifth slot. In the example of FIG. 8, it is also assumed that a target PUCCH slot of SPS HARQ-ACK corresponding to each of SPS PDSCH #1 and SPS PDSCH #2 is the fifth slot due to the deferral. In this case, SPS HARQ-ACK bits respectively corresponding to SPS PDSCH #1 and SPS PDSCH #2 are appended after the Type 3 HARQ-ACK CB to be multiplexed to the Type 3 HARQ-ACK CB.

According to Option 2 of Proposal 1, terminal 20 autonomously performs processing such as multiplexing of a deferred HARQ-ACK bit and the Type 3 HARQ-ACK CB, thereby eliminating the need for restricting enabling/disabling of the SPS HARQ-ACK deferral, a transmission timing of the Type 3 HARQ-ACK triggering DCI, or the like.

### (Variation 1)

Note that terminal 20 may map (overwrite) the deferred SPS HARQ-ACK bit in a position of the corresponding HPN of the Type 3 HARQ-ACK CB instead of appending the deferred SPS HARQ-ACK bit after the Type 3 HARQ-ACK CB.

In the example of FIG. 8, terminal 20 maps an SPS HARQ-ACK bit corresponding to SPS PDSCH #1 in a position of HPN #10 of the Type 3 HARQ-ACK CB and maps an SPS HARQ-ACK bit corresponding to SPS PDSCH #2 in a position of HPN #6 of the Type 3 HARQ-ACK CB.

This allows transmission of the SPS HARQ-ACK bits without increasing the amount of information transmitted in a PUCCH slot of the Type 3 HARQ-ACK CB.

### (Variation 2)

Terminal 20 may drop a deferred SPS HARQ-ACK bit. This is because the Type 3 HARQ-ACK CB includes HARQ-ACK bits for all HARQ process numbers before the PUCCH slot and all the HARQ-ACK bits can be transmitted by the Type 3 HARQ-ACK CB without transmitting the SPS HARQ-ACK bit.

### <Proposal 2>

In Proposal 2, a description will be given of a relationship between e-Type 3 HARQ-ACK CB report/feedback with smaller CB size and SPS HARQ-ACK deferral.

### (Option 1)

In Option 1, terminal 20 does not assume that the SPS HARQ-ACK deferral is enabled in any SPS configuration, and at the same time, that triggering of the e-Type 3 HARQ-ACK CB is enabled for any DCI format. Note that, in Option 1, it is assumed that the SPS HARQ-ACK deferral and the triggering of the e-Type 3 HARQ-ACK CB are configured at the same time, but it is not necessary to assume that they are enabled at the same time.

In this case, base station 10 controls enabling/disabling of the SPS HARQ-ACK deferral or a transmission timing of the e-Type 3 HARQ-ACK CB triggering DCI etc. so that a PUCCH slot of the e-Type 3 HARQ-ACK CB and a target slot of the SPS HARQ-ACK deferral are not the same slot.

According to Option 1 of Proposal 2, terminal 20 eliminates the need for processing such as multiplexing of a deferred SPS HARQ-ACK bit and the e-Type 3 HARQ-ACK CB, thereby simplifying the operation (control) of terminal 20.

### (Option 2)

In Option 2, terminal 20 assumes that the SPS HARQ-ACK deferral is enabled in any SPS configuration, and at the same time, that the triggering of the e-Type 3 HARQ-ACK CB is enabled in any DCI format.

That is, terminal 20 assumes that, when a target slot for the deferral of an SPS HARQ-ACK bit is not determined before a PUCCH slot, the e-Type 3 HARQ-ACK CB is triggered to be reported in the PUCCH slot, and the deferred SPS HARQ-ACK bit is present in the PUCCH slot of the e-Type 3 HARQ-ACK CB.

This Option 2 of Proposal 2 can be divided into the following two cases.

### (Case 1)

Case 1 is a case where all deferred SPS HARQ-ACK bits are included in the e-Type 3 HARQ-ACK CB.

### (Case 2)

Case 2 is a case where some of deferred SPS HARQ-ACK bits are not included in the e-Type 3 HARQ-ACK CB.

Case 2 can be further divided into the following three sub-cases in terms of the PHY priority (hereinafter simply referred to as "priority"). Note that the priority may be represented by a priority index of 0 or 1, for example.

### (Case 2-1)

Case 2-1 is a case where there is a deferred SPS HARQ-ACK bit that has the same priority as the priority specified by the e-Type 3 HARQ-ACK CB triggering DCI and is not included in the e-Type 3 HARQ-ACK CB.

### (Case 2-2)

Case 2-2 is a case where all deferred SPS HARQ-ACK bits that have the same priority as the priority specified by the e-Type 3 HARQ-ACK CB triggering DCI are included in the e-Type 3 HARQ-ACK CB.

### (Case 2-3)

Case 2-3 is a case where all deferred SPS HARQ-ACK bits respectively have priorities different from the priority specified by the e-Type 3 HARQ-ACK CB triggering DCI.

In the following, the operation of terminal 20 in each case will be described.

### (Terminal Operation in Case 1)

For Case 1, terminal 20 multiplexes the deferred SPS HARQ-ACK bits and the e-Type 3 HARQ-ACK CB by appending the SPS HARQ-ACK bits after the e-Type 3 HARQ-ACK CB and transmits the e-Type 3 HARQ-ACK CB and the SPS HARQ-ACK bits in a PUCCH slot.

At this time, the SPS HARQ-ACK deferral is ended, and no further deferral is made for the deferred SPS HARQ-ACK bits.

### (Variation 1)

Note that terminal 20 may map (overwrite) the deferred SPS HARQ-ACK bits in positions of the corresponding HPNs of the e-Type 3 HARQ-ACK CB instead of appending the deferred SPS HARQ-ACK bits after the e-Type 3 HARQ-ACK CB.

This allows transmission of the SPS HARQ-ACK bits without increasing the amount of information transmitted in a PUCCH slot of the e-Type 3 HARQ-ACK CB.

### (Variation 2)

Terminal 20 may drop the deferred SPS HARQ-ACK bits. This is because the e-Type 3 HARQ-ACK CB includes HARQ-ACK bits for some HARQ process numbers before the PUCCH slot and the HARQ-ACK bits can possibly be transmitted by the e-Type 3 HARQ-ACK CB without transmitting the SPS HARQ-ACK bits.

### (Terminal Operation in Case 2-1)

For Case 2-1, terminal 20 may perform any of the operations indicated by the following alternations Alt. 0, Alt. 1, Alt. 2, Alt. 3, and Alt. 4.

### (Alt. 0)

As Alt. 0 of Case 2-1, terminal 20 drops all deferred SPS HARQ-ACK bits and transmits the e-Type 3 HARQ-ACK CB in a PUCCH slot.

### (Alt. 1)

As Alt. 1 of Case 2-1, terminal 20 appends all deferred SPS HARQ-ACK bits after the e-Type 3 HARQ-ACK CB regardless of whether the priority of the deferred SPS HARQ-ACK bits is the same as the priority specified by the e-Type 3 HARQ-ACK CB triggering DCI.

For Alt. 1, the following Opt-A and Opt-B are given in terms of a rule of the order of deferred SPS HARQ-ACK bits.

Opt-A: ordering of SPS HARQ-ACK bits may be performed for a priority (first step) first, and then ordering of SPS HARQ-ACK bits may be performed for a different priority (second step).

The following Opt-A1, Opt-A2, Opt-A3, and Opt-A4 are given as sub-options of the ordering of SPS HARQ-ACK bits for a priority, which is the first step of Opt-A.

Opt-A1: the ordering of SPS HARQ-ACK bits may be performed based on three parameters of {serving cell index}, {SPS configuration index}, and {SPS occasion slot index}.

Further, the following Opt-A1-1 and Opt-A1-2 are given as sub-options of Opt-A1.

Opt-A1-1: the ordering may be performed first in ascending/descending order of SPS occasion slot index for {SPS configuration index, serving cell index}, then in ascending/descending order of SPS configuration index for {serving cell index}, and then in ascending/descending order of serving cell index.

Opt-A1-2: the ordering may be performed first in ascending/descending order of SPS configuration index for each {SPS occasion slot index, serving cell index}, then in ascending/descending order of SPS occasion slot index for {serving cell index}, and then in ascending/descending order of serving cell index.

Opt-A2: {start/end symbol of corresponding SPS PDSCH occasion} may be specified based on {serving cell index}.

Further, the following Opt-A2-1 and Opt-A2-2 are given as sub-options of Opt-A2.

Opt-A2-1: the ordering may be performed first in ascending/descending order of serving cell index for {start/end symbol of SPS PDSCH opportunity} and then in ascending/descending order of start/end symbol of SPS PDSCH opportunity.

Opt-A2-2: the ordering may be performed first in ascending/descending order of start/end symbol of SPS PDSCH opportunity for {serving cell index} and then in ascending/descending order of serving cell index.

Opt-A3: the ordering of SPS HARQ-ACK bits may be performed based on {UL slot/sub-slot index of original dropped HARQ-ACK CB}.

In this case, the ordering may be performed first in ascending/descending order of UL slot/sub-slot index of original dropped HARQ-ACK CB for {serving cell index} and then in ascending/descending order of serving cell index.

At this time, the order of SPS HARQ-ACK bits in one UL slot/sub-slot index remains the same as in a HARQ-ACK CB configuration rule of Rel-15/Rel-16 for SPS HARQ-ACK.

Opt-A4: the ordering of SPS HARQ-ACK bits may be performed based on {serving cell index} and {HARQ process ID}.

In this case, the ordering may be performed first in ascending/descending order of HARQ process ID for {serving cell index} and then in ascending/descending order of serving cell index.

The following Opt-A2-1 and Opt-A2-2 are given as sub-options of the ordering of SPS HARQ-ACK bits for a different priority, which is the second step of Opt-A.

Opt-A2-1: a deferred SPS HARQ-ACK bit with the same priority as the priority specified by the e-Type 3 HARQ-ACK CB triggering DCI is mapped first, and a deferred SPS HARQ-ACK bit with different priority is mapped later.

Opt-A2-2: an SPS HARQ-ACK bit with particular priority (e.g., priority index 0 (or 1)) is mapped first, and an SPS HARQ-ACK bit with priority other than the particular priority (e.g., priority index 1 (or 0)) is mapped later.

Opt-B: the ordering of SPS HARQ-ACK bits may be performed regardless of priority (without dividing the process into two steps as in Opt-A).

In the case of Opt-B, the above Opt-A1, Opt-A2, Opt-A3, and Opt-A4 are applicable in terms of the ordering of deferred SPS HARQ-ACK bits appended to the e-Type 3 HARQ-ACK CB.

### (Alt. 2)

As Alt. 2 of Case 2-1, terminal 20 appends all deferred SPS HARQ-ACK bits that are not included in the e-Type 3 HARQ-ACK CB after the e-Type 3 HARQ-ACK CB regardless of whether the priority of the deferred SPS HARQ-ACK bits is the same as the priority specified by the e-Type 3 HARQ-ACK CB triggering DCI.

Note that the above rules of ordering in Alt. 1 are applicable in terms of the order of deferred SPS HARQ-ACK bits appended to the e-Type 3 HARQ-ACK CB.

### (Alt. 3)

As Alt. 3 of Case 2-1, terminal 20 appends, after the e-Type 3 HARQ-ACK CB, all deferred SPS HARQ-ACK bits with the same priority as the priority specified by the e-Type 3 HARQ-ACK CB triggering DCI.

Note that the above Opt-A1, Opt-A2, Opt-A3, and Opt-A4 of Alt. 1 are applicable in terms of the ordering of deferred SPS HARQ-ACK bits appended to the e-Type 3 HARQ-ACK CB.

In Alt. 3 of Case 2-1, when there is a deferred SPS HARQ-ACK bit with priority different from the priority specified by the e-Type 3 HARQ-ACK CB triggering DCI, terminal 20 may perform any of the operations indicated by the following sub-alternations Alt. 3-1, Alt. 3-2, and Alt. 3-3.

### (Alt. 3-1)

As Alt. 3-1, terminal 20 determines a normal target slot and resource to defer all the deferred SPS HARQ-ACK bits with different priorities. Note that the details of Alt. 3-1 will be described later.

### (Alt. 3-2)

As Alt.3-2, terminal 20 determines a normal target slot and resource for the deferral of the deferred SPS HARQ-ACK bits with different priorities that are not included in the e-Type 3 HARQ-ACK CB.

### (Alt. 3-3)

As Alt. 3-3, terminal 20 drops the deferred SPS HARQ-ACK bits with different priorities.

### (Alt. 4)

As Alt. 4 of Case 2-1, terminal 20 appends, after the e-Type 3 HARQ-ACK CB, all SPS HARQ-ACK bits that have the same priority as the priority specified by the e-Type 3 HARQ-ACK CB triggering DCI and are not included in the e-Type 3 HARQ-ACK CB.

Note that the above Opt-A1, Opt-A2, Opt-A3, and Opt-A4 of Alt. 1 are applicable in terms of the ordering of deferred SPS HARQ-ACK bits appended to the e-Type 3 HARQ-ACK CB.

In addition, in Alt. 3 of Case 2-1, when there is a deferred SPS HARQ-ACK bit with priority different from the priority specified by the e-Type 3 HARQ-ACK CB triggering DCI, terminal 20 may perform any of the operations in the above Alt. 3-1, Alt. 3-2, and Alt. 3-3.

### (Terminal Operation in Case 2-2)

For Case 2-2, terminal 20 may perform any of the operations of Alt. 0, Alt. 1, Alt. 2, and Alt. 3 of Case 2-1 described above.

### (Terminal Operation in Case 2-3)

For Case 2-3, terminal 20 may perform any of the operations indicated by the following alternations Alt. 0, Alt. 1, Alt. 2, Alt. 3, and Alt. 4.

### (Alt. 0)

As Alt. 0 of Case 2-3, terminal 20 drops all deferred SPS HARQ-ACK bits and transmits the e-Type 3 HARQ-ACK CB in a PUCCH slot.

### (Alt. 1)

As Alt. 1 of Case 2-3, terminal 20 appends all deferred SPS HARQ-ACK bits after the e-Type 3 HARQ-ACK CB.

Note that the above Opt-A1, Opt-A2, Opt-A3, and Opt-A4 of Alt. 1 of Case 2-1 are applicable in terms of the ordering of the deferred SPS HARQ-ACK bits appended to the e-Type 3 HARQ-ACK CB.

### (Alt. 2)

As Alt. 2 of Case 2-3, terminal 20 appends, after the e-Type 3 HARQ-ACK CB, all deferred SPS HARQ-ACK bits that are not included in the e-Type 3 HARQ-ACK CB.

Note that the above Opt-A1, Opt-A2, Opt-A3, and Opt-A4 of Alt. 1 of Case 2-1 are applicable in terms of the ordering of the deferred SPS HARQ-ACK bits appended to the e-Type 3 HARQ-ACK CB.

### (Alt. 3)

As Alt. 3 of Case 2-3, terminal 20 determines a normal target slot and resource for deferring all deferred SPS HARQ-ACK bits with priority different from the priority specified by the e-Type 3 HARQ-ACK CB triggering DCI.

### (Alt. 4)

As Alt. 4 of Case 2-3, terminal 20 determines a normal target slot and resource for deferring a deferred SPS HARQ-ACK bit that is not included in the e-Type 3 HARQ-ACK CB and has priority different from the priority specified by the e-Type 3 HARQ-ACK CB triggering DCI.

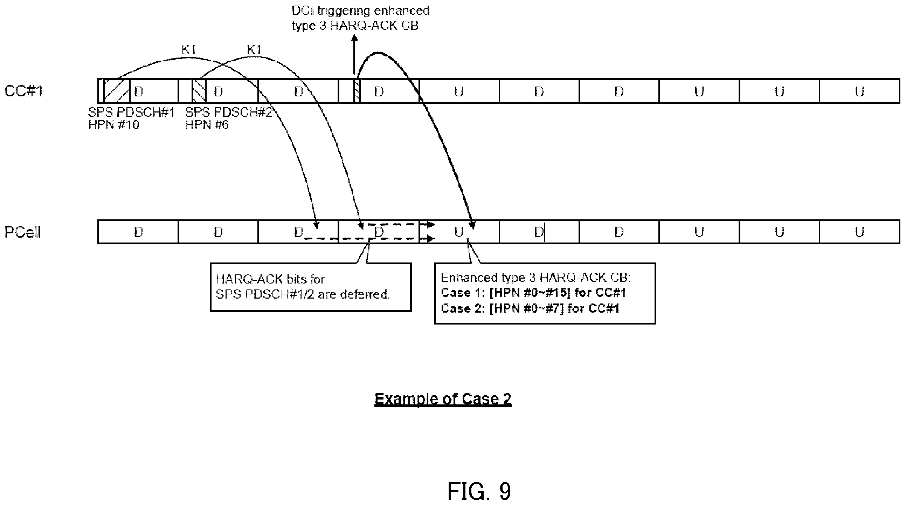

FIG. 9 illustrates an exemplary relationship between the e-Type 3 HARQ-ACK CB and the SPS HARQ-ACK deferral. The horizontal axis in FIG. 9 represents the time axis. FIG. 9 illustrates ten slots, by way of example. The ten slots are each labeled "D" or "U". A slot labeled "D" represents a DL slot, and a slot labeled "U" represents a UL slot. In the example of FIG. 9, in CC #1, the first slot includes SPS PDSCH #1 (HPN #10), the second slot includes SPS PDSCH #2 (HPN #6), and the fourth slot includes the e-Type 3 HARQ-ACK CB triggering DCI.

In the example of FIG. 9, it is assumed that a PUCCH slot of the e-Type 3 HARQ-ACK CB specified by the triggering DCI is the fifth slot. In the example of FIG. 9, it is also assumed that a target PUCCH slot of SPS HARQ-ACK corresponding to each of SPS PDSCH #1 and SPS PDSCH #2 is the fifth slot due to the deferral.

For Case 1, all deferred SPS HARQ-ACK bits may be included in the e-Type 3 HARQ-ACK CB. In the example of FIG. 9, it is assumed that the e-Type 3 HARQ-ACK CB includes HARQ-ACK bits of HPN #0 to #15. In this case, SPS HARQ-ACK bits respectively corresponding to SPS PDSCH #1 and SPS PDSCH #2 are appended after the e-Type 3 HARQ-ACK CB to be multiplexed to the e-Type 3 HARQ-ACK CB.

For Case 2, some of deferred SPS HARQ-ACK bits are not included in the e-Type 3 HARQ-ACK CB. In the example of FIG. 9, it is assumed that the e-Type 3 HARQ-ACK CB includes HARQ-ACK bits of HPN #0 to #7. In this case, an SPS HARQ-ACK bit corresponding to SPS PDSCH #2 of HPN #6 is appended after the e-Type 3 HARQ-ACK CB to be multiplexed to the e-Type 3 HARQ-ACK CB. Meanwhile, an SPS HARQ-ACK bit corresponding to SPS PDSCH #1 of HPN #10 is not multiplexed to the e-Type 3 HARQ-ACK CB.

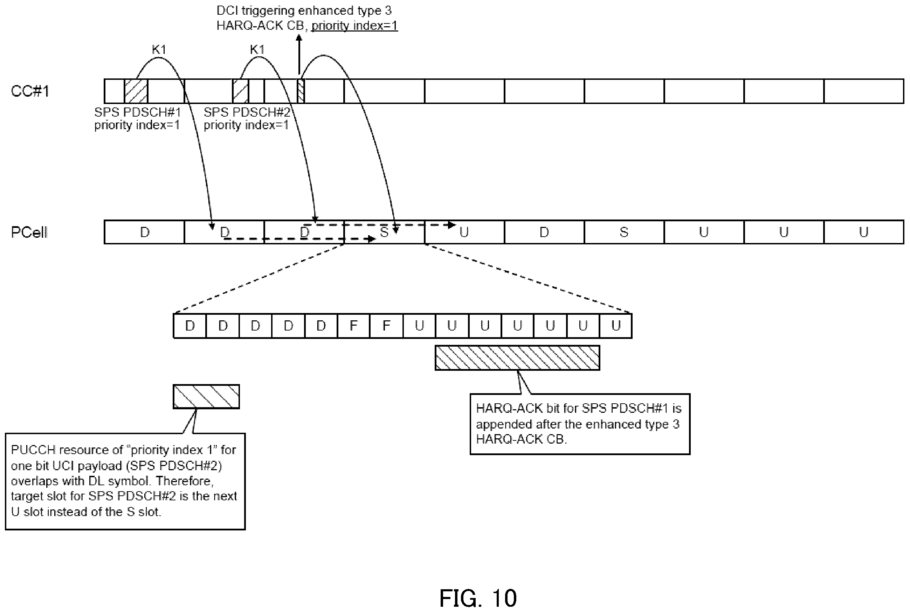

FIG. 10 illustrates an exemplary relationship between the e-Type 3 HARQ-ACK CB and the SPS HARQ-ACK deferral in Alt. 3-1 of Case 2-1. The horizontal axis in FIG. 10 represents the time axis. FIG. 10 illustrates ten slots, by way of example. The ten slots are each labeled "D", "U", or "S". A slot labeled "D" represents a DL slot, a slot labeled "U" represents a UL slot, and a slot labeled "S" represents a special slot. Each symbol of the special slot is configured with any of downlink, uplink, and flexible. Terminal 20 determines D/U/F of each symbol in the special slot according to the semi-static TDD configuration information.

In the example of FIG. 10, in CC #1, the first slot includes SPS PDSCH #1 (priority index 1), the second slot includes SPS PDSCH #2 (priority index 0), and the third slot includes the e-Type 3 HARQ-ACK CB triggering DCI (priority index 1).

In the example of FIG. 10, it is assumed that a PUCCH slot of the e-Type 3 HARQ-ACK CB specified by the triggering DCI is the fourth slot. In the example of FIG. 10, it is also assumed that symbols corresponding to a period configured to SPS PDSCH #1 are the ninth to thirteenth symbols, and symbols corresponding to a period configured to SPS PDSCH #2 are the first and second symbols.

In this case, the symbols corresponding to the period configured to SPS PDSCH #1 are UL symbols of the fourth slot (special slot), and thus an SPS HARQ-ACK bit corresponding to SPS PDSCH #1 is multiplexed to the e-Type 3 HARQ-ACK CB and transmitted in the fourth slot. Meanwhile, the symbols corresponding to the period configured to SPS PDSCH #2 are DL symbols of the fourth slot (special slot), and thus an SPS HARQ-ACK bit corresponding to SPS PDSCH #2 is deferred without being transmitted in the fourth slot and is transmitted in the next fifth slot (UL slot).

According to Option 2 of Proposal 2, terminal 20 autonomously performs processing such as multiplexing of a deferred HARQ-ACK bit and the e-Type 3 HARQ-ACK CB, thereby eliminating the need for restricting enabling/disabling of the SPS HARQ-ACK deferral, a transmission timing of the e-Type 3 HARQ-ACK triggering DCI, or the like.

### <Proposal 3>

In Proposal 3, a description will be given of a relationship between the one-shot triggering HARQ-ACK retransmission and the SPS HARQ-ACK deferral.

### (Option 1)

In Option 1, terminal 20 does not assume that the SPS HARQ-ACK deferral is enabled in any SPS configuration, and at the same time, that the one-shot triggering HARQ-ACK retransmission is enabled for any DCI format. Note that, in Option 1, it is assumed that the SPS HARQ-ACK deferral and the one-shot triggering HARQ-ACK retransmission are configured at the same time, but it is not necessary to assume that they are enabled at the same time.

In this case, base station 10 controls enabling/disabling of the SPS HARQ-ACK deferral or a transmission timing of the one-shot triggering DCI etc. so that a PUCCH slot of a HARQ-ACK CB for retransmission based on the one-shot triggering HARQ-ACK retransmission (hereinafter, sometimes simply abbreviated as "HARQ-ACK CB for retransmission") and a target slot of the SPS HARQ-ACK deferral are not the same slot.

According to Option 1 of Proposal 3, terminal 20 eliminates the need for processing such as multiplexing of a deferred SPS HARQ-ACK bit and the HARQ-ACK CB for retransmission, thereby simplifying the operation (control) of terminal 20.

### (Variation)

When the SPS HARQ-ACK deferral is enabled for any SPS configuration having HARQ-ACK with particular priority, terminal 20 need not assume reception of the one-shot triggering DCI indicating the particular priority.

In this case, when a target slot of deferred SPS HARQ-ACK with priority other than the particular priority is the same as a PUCCH slot specified by the one-shot triggering DCI indicating the particular priority, terminal 20 may drop the deferred SPS HARQ-ACK.

### (Option 2)

In Option 2, terminal 20 assumes that the SPS HARQ-ACK deferral is enabled for any SPS configuration, and at the same time, that the one-shot triggering HARQ-ACK retransmission is enabled for any DCI format.

That is, terminal 20 assumes that, when a target slot for the deferral of an SPS HARQ-ACK bit is not determined before a PUCCH slot, the HARQ-ACK CB for retransmission is triggered to be reported in the PUCCH slot, and the deferred SPS HARQ-ACK bit is present in the PUCCH slot of the HARQ-ACK CB.

This Option 2 of Proposal 3 can be divided into the following two cases.

### (Case 1)

Case 1 is a case where all deferred SPS HARQ-ACK bits can be included in the HARQ-ACK CB for retransmission specified by the one-shot triggering DCI.

### (Case 2)

Case 2 is a case where some of deferred SPS HARQ-ACK bits are not included in the HARQ-ACK CB for retransmission specified by the one-shot triggering DCI.

Case 2 can be further divided into the following three sub-cases in terms of the priority.

### (Case 2-1)

Case 2-1 is a case where there is a deferred SPS HARQ-ACK bit that has the same priority as the priority specified by the one-shot triggering DCI and is not included in the HARQ-ACK CB for retransmission.

### (Case 2-2)

Case 2-2 is a case where all deferred SPS HARQ-ACK bits that have the same priority as the priority specified by the one-shot triggering DCI are included in the e-Type 3 HARQ-ACK CB.

### (Case 2-3)

Case 2-3 is a case where all deferred SPS HARQ-ACK bits respectively have priorities different from the priority specified by the one-shot triggering DCI.

In the following, the operation of terminal 20 in each case will be described.

### (Terminal Operation in Case 1)

For Case 1, terminal 20 multiplexes the deferred SPS HARQ-ACK bits and the HARQ-ACK CB for retransmission specified by the one-shot triggering DCI by appending the SPS HARQ-ACK bits after the HARQ-ACK CB for retransmission and transmits the HARQ-ACK CB for retransmission and the SPS HARQ-ACK bits in a PUCCH slot.

At this time, the SPS HARQ-ACK deferral is ended, and no further deferral is made for the deferred SPS HARQ-ACK bits.

### (Terminal Operation in Case 2-1)

In Case 2-1, terminal 20 may apply the operation in Case 2-1 of Proposal 2 described above. In this case, the "e-Type 3 HARQ-ACK CB" of the above Proposal 2 is replaced with the "HARQ-ACK CB for retransmission specified by one-shot triggering DCI".

### (Terminal Operation in Case 2-2)

In Case 2-2, terminal 20 may apply the operation in Case 2-2 of Proposal 2 described above. In this case, the "e-Type 3 HARQ-ACK CB" of the above Proposal 2 is replaced with the "HARQ-ACK CB for retransmission specified by one-shot triggering DCI".

### (Terminal Operation in Case 2-3)

In Case 2-3, terminal 20 may apply the operation in Case 2-3 of Proposal 2 described above. In this case, the "e-Type 3 HARQ-ACK CB" of the above Proposal 2 is replaced with the "HARQ-ACK CB for retransmission specified by one-shot triggering DCI".

### (Variation)

In a case where it is allowed to multiplex a HARQ-ACK bit for retransmission specified by the one-shot triggering DCI and another HARQ-ACK bit (e.g., initial HARQ-ACK bit of Type 1/2 HARQ-ACK CB with the same priority in the same PUCCH slot, etc.), the "e-Type 3 HARQ-ACK CB" of the above Proposal 2 is replaced with "full multiplexing HARQ-ACK CB" in Case 2-3. That is, terminal 20 performs processing on a deferred SPS HARQ-ACK bit after considering the multiplexing of the HARQ-ACK bit for retransmission specified by the one-shot triggering DCI and another HARQ-ACK bit.

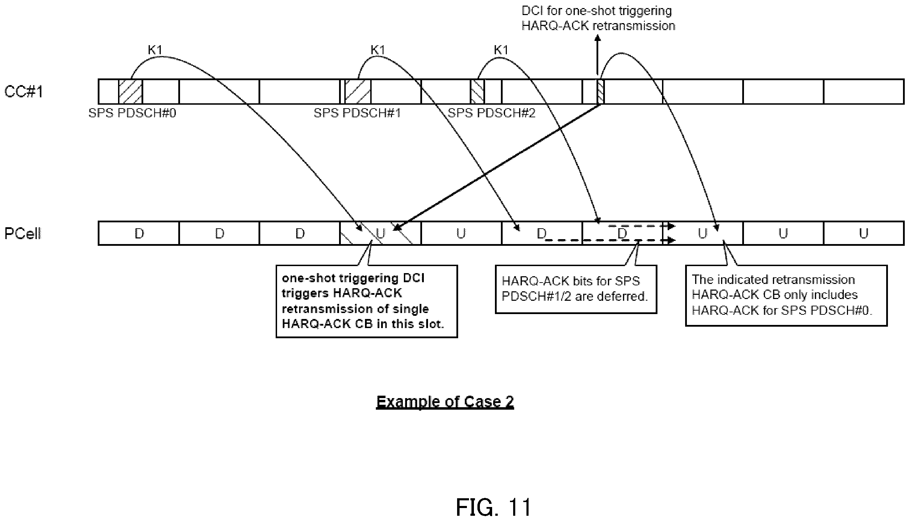

FIG. 11 illustrates an exemplary relationship between the Type 3 HARQ-ACK CB and the SPS HARQ-ACK deferral. The horizontal axis in FIG. 11 represents the time axis. FIG. 11 illustrates ten slots, by way of example. The ten slots are each labeled "D" or "U". A slot labeled "D" represents a DL slot, and a slot labeled "U" represents a UL slot. In the example of FIG. 11, in CC #1, a HARQ-ACK CB including a HARQ-ACK bit corresponding to SPS PDSCH #0 included in the first slot is transmitted in the fourth slot of PCell, but the HARQ-ACK CB is required to be retransmitted; accordingly, the one-shot triggering DCI is transmitted in the seventh slot of CC #1. In the example of FIG. 11, the fourth slot includes SPS PDSCH #1, and the fifth slot includes SPS PDSCH #2.

In the example of FIG. 11, it is assumed that a PUCCH slot for the HARQ-ACK CB for retransmission specified by the one-shot triggering DCI is the eighth slot. In the example of FIG. 11, it is also assumed that a target PUCCH slot of SPS HARQ-ACK corresponding to each of SPS PDSCH #1 and SPS PDSCH #2 is the eighth slot due to the deferral. In this case, SPS HARQ-ACK bits respectively corresponding to SPS PDSCH #1 and SPS PDSCH #2 are appended after the HARQ-ACK CB for retransmission to be multiplexed to the HARQ-ACK CB for retransmission.

According to Option 2 of Proposal 3, terminal 20 autonomously performs processing such as multiplexing of a deferred HARQ-ACK bit and the HARQ-ACK CB for retransmission specified by the one-shot triggering DCI, thereby eliminating the need for restricting enabling/disabling of the SPS HARQ-ACK deferral, a transmission timing of the one-shot triggering DCI, or the like.

Note that, in Proposal 3, a HARQ-ACK CB is retransmitted based on one-shot triggering HARQ-ACK retransmission, but the present disclosure is not limited to this, and a HARQ-ACK bit may be retransmitted. The type of the HARQ-ACK CB for retransmission may be any of type 1, type 2, legacy type 3 defined in Rel-16, and enhanced type 3 defined in Rel-17.

By adopting any of the above-described proposals and the options (or alternations (Alt.)) of the proposals, a terminal can appropriately transmit deferred SPS HARQ-ACK taking into consideration a relationship with a HARQ-ACK retransmission function such as the (e)Type 3 HARQ-ACK CB and the HARQ-ACK CB for retransmission based on the one-shot triggering HARQ-ACK retransmission.

In each of the proposals described above, which option (or alternation (Alt.)) among the options (or alternations) of each proposal is to be used may be specified by a specification or may be configured by a parameter of a higher layer. In addition, the terminal may report by using capability information of the terminal (e.g., "UE capability") which option (or alternation) among the options (or alternations) of each proposal is to be used. Further, which option (or alternation) among the options (or alternations) of each proposal is to be used may be determined by a combination of the configuration of the parameter of the higher layer and the reported capability information of the terminal. For example, a base station may determine one or more options (or alternations) among options (or alternations) that can be used by the terminal indicated by the reported capability information of the terminal, and the determined information may be configured by the parameter of the higher layer. Note that it is not limited to the case of being configured by the parameter of the higher layer, and the information may be indicated by control information (e.g., DCI) of a physical layer.

Note that, in the present embodiment, a "slot" may be replaced with a "sub-slot". In addition, in the above-described embodiment, a "slot" is a term indicating a certain time period and may be replaced with another expression. For example, a "slot" may be replaced with another expression such as a "symbol", "time period", and "time resource".

Although SPS is exemplified in the present embodiment, the present disclosure is not limited to this. For example, the present disclosure may be applied to persistent scheduling or dynamic scheduling instead of SPS.

In the present embodiment, SPS PDSCH and SPS HARQ-ACK to SPS PDSCH are exemplified, but the present disclosure is not limited to this. For example, the present disclosure may be applied to a data channel other than SPS PDSCH and acknowledgement to the data channel. In addition, the present disclosure may be applied not only to a data channel but also to a control channel (e.g., PDCCH) and acknowledgement to the control channel. The present disclosure may also be applied to feedback information other than SPS HARQ-ACK.

Different options (or alternations) may be applied to different schemes of PUCCH repetition. For example, an option of each proposal applied to a scheme of slot-based PUCCH repetition and an option of each proposal applied to a scheme of sub-slot-based PUCCH repetition may be different from each other.

The capability information of a terminal (UE capability) may include, for example, information specifying whether the terminal supports SPS HARQ-ACK deferral, information specifying whether the terminal supports legacy Type 3 HARQ-ACK CB defined in Rel-16, information specifying whether the terminal supports e-Type 3 HARQ-ACK CB defined in Rel-17, information specifying whether the terminal supports one-shot triggering HARQ-ACK retransmission defined in Rel-17, information specifying whether the terminal simultaneously supports SPS HARQ-ACK deferral and legacy Type 3 HARQ-ACK CB defined in Rel-16, information specifying whether the terminal supports SPS HARQ-ACK deferral and e-Type 3 HARQ-ACK CB defined in Rel-17, and information specifying whether the terminal supports SPS HARQ-ACK deferral and one-shot triggering HARQ-ACK retransmission defined in Rel-17. In addition, the capability information of the terminal may include information indicating whether the terminal supports the above-described proposals and whether the terminal supports the options (or alternations) of the proposals, which are described above.

Note that the expressions of "deferral" and "postponing" may be replaced with each other in the present embodiment. In addition, "deferral" and "postponing" may be replaced with other expressions such as "delay", "procrastination", and "overdue".

In addition, the expressions of "limitation" and "restriction" may be replaced with each other in the present embodiment. In addition, "limitation" and "restriction" may be replaced with other expressions such as "constraint", "limit", and "restraint".

### <Exemplary Radio Communication System>

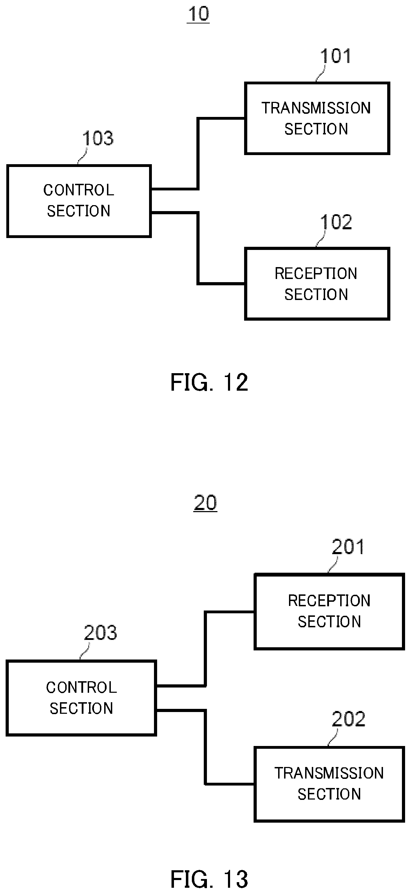

A radio communication system according to the present embodiment includes base station 10 illustrated in FIG. 12 and terminal 20 illustrated in FIG. 13. The numbers of base stations 10 and terminals 20 are not particularly limited. Two base stations 10 and a single terminal 20 may communicate with each other in the system. The radio communication system may be a radio communication system conforming to New Radio (NR). By way of example, the radio communication system may be a radio communication system conforming to a scheme called URLLC and/or Industrial Internet of Things (IIoT).

Note that radio communication system may be a radio communication system conforming to a scheme called 5G, Beyond 5G, 5G Evolution, or 6G.

Base station 10 may be referred to as an NG-RAN node, ng-eNB, eNodeB (eNB), or gNodeB (gNB). Terminal 20 may be referred to as user equipment (UE). In addition, base station 10 may be considered to be an apparatus included in a network to which terminal 20 connects.

The radio communication system may include a next generation-radio access network (NG-RAN). The NG-RAN includes a plurality of NG-RAN nodes, specifically, gNBs (or ng-eNBs), and connects to a core network conforming to 5G (5GC, not illustrated). Note that NG-RAN and 5GC may be simply expressed as a "network".

Base station 10 performs radio communication with terminal 20. For example, the radio communication to be performed conforms to NR. At least one of base station 10 and terminal 20 may support massive multiple-input multiple-output (MIMO) for generating a beam (BM) with higher directivity by controlling radio signals transmitted from a plurality of antenna elements. At least one of base station 10 and terminal 20 may support carrier aggregation (CA) using a plurality of component carriers (CCs) aggregated together. Further, at least one of base station 10 and terminal 20 may support dual connectivity (DC) for performing communication between terminal 20 and each of a plurality of base stations 10.

The radio communication system may support a plurality of frequency bands. For example, the radio communication system supports frequency range (FR) 1 and FR2. The frequency band of each FR is as follows, for example.
FR1: 410 MHz to 7.125 GHz
FR2: 24.25 GHz to 52.6 GHz

FR1 may use sub-carrier spacing (SCS) of 15 kHz, 30 kHz, or 60 kHz, and may use a bandwidth (BW) of 5 MHz to 100 MHz. FR2 uses, for example, frequency higher than FR1. FR2 may use the SCS of 60 kHz or 120 kHz, and may use a bandwidth (BW) of 50 MHz to 400 MHz. In addition, the SCS of 240 kHz may also be included in FR2.

The radio communication system according to the present embodiment may further support a frequency band higher than that of FR2. For example, the radio communication system according to the present embodiment may support a frequency band up to 114.25 GHz exceeding 52.6 GHz. Such high frequency band may be referred to as "FR2x".

Further, Cyclic Prefix-Orthogonal Frequency Division Multiplexing (CP-OFDM)/Discrete Fourier Transform-Spread-Orthogonal Frequency Division Multiplexing (DFT-S-OFDM), which have the sub-carrier spacing (SCS) larger than the above examples, may be applied. The DFT-S-OFDM may be applied to both uplink and downlink, or may be applied to either one of them.

In the radio communication system, a slot configuration pattern of time division duplex (TDD) may be configured. For example, the slot configuration pattern may specify a pattern indicating the order of two or more of a slot where a downlink (DL) signal is transmitted, a slot where an uplink (UL) signal is transmitted, a slot where a DL signal, a UL signal, and a guard symbol are mixed, and a slot where a signal to be transmitted is flexibly changed.

In the radio communication system, channel estimation for a PUSCH (or physical uplink control channel (PUCCH)) can be performed for each slot using a demodulation reference signal (DMRS); further, channel estimation for a PUSCH (or PUCCH) can be performed using a DMRS assigned to each of a plurality of slots. Such channel estimation may be referred to as joint channel estimation, cross-slot channel estimation, or another name.

Terminal 20 may transmit a DMRS assigned to each of a plurality of slots so that base station 10 can perform the joint channel estimation using the DMRSs.

Further, the radio communication system may include an additional enhanced function of feedback from terminal 20 to base station 10. The additional function includes, for example, an enhanced function of terminal feedback to HARQ-ACK.

Next, a description will be given of configurations of base station 10 and terminal 20. Note that the configurations of base station 10 and terminal 20 exemplify functions related to the present embodiment. Base station 10 and terminal 20 may have a function that is not illustrated. Note that the names of function categories and/or function sections are not limited as long as the function is for implementing an operation according to the present embodiment.

### <Configuration of Base Station>

FIG. 12 is a block diagram illustrating an exemplary configuration of base station 10 according to the present embodiment. Base station 10 includes, for example, transmission section 101, reception section 102, and control section 103. Base station 10 communicates with terminal 20 (see FIG. 13) by radio.

Transmission section 101 transmits a downlink (DL) signal to terminal 20. For example, transmission section 101 transmits the DL signal under the control of control section 103.

For example, the DL signal may include a downlink data signal and control information (e.g., downlink control information (DCI)). The DL signal may also include information indicating scheduling related to signal transmission by terminal 20 (e.g., UL grant). Further, the DL signal may include higher layer control information (e.g., control information of radio resource control (RRC)). Furthermore, the DL signal may include a reference signal.

A channel used for transmitting the DL signal includes, for example, a data channel and a control channel. For example, the data channel includes a physical downlink shared channel (PDSCH), and the control channel includes a physical downlink control channel (PDCCH). Base station 10 transmits, to terminal 20, the control information using the PDCCH, and the downlink data signal using the PDSCH, for example.

The reference signal included in the DL signal may include at least one of a demodulation reference signal (DMRS), a phase tracking reference signal (PTRS), a channel state information-reference signal (CSI-RS), a sounding reference signal (SRS), and a positioning reference signal (PRS) for position information, for example. The reference signal such as the DMRS and PTRS is used for demodulation of the downlink data signal, and transmitted using the PDSCH, for example.

Reception section 102 receives an uplink (UL) signal transmitted from terminal 20. For example, reception section 102 receives the UL signal under the control of control section 103.

Control section 103 controls a communication operation of base station 10 including transmission processing in transmission section 101 and reception processing in reception section 102.

For example, control section 103 acquires information such as data and control information from a higher layer, and outputs the information to transmission section 101. Control section 103 also outputs data, control information, and the like received from reception section 102 to the higher layer.

For example, control section 103 performs allocation of a resource (or channel) to be used for transmitting and receiving a DL signal and/or a resource to be used for transmitting and receiving a UL signal, based on data, control information, etc. obtained from a signal received from terminal 20 (e.g., data and control information) and/or a higher layer. Information on the allocated resource may be included in the control information to be transmitted to terminal 20.

Control section 103 configures a PUCCH resource, as an example of the resource to be used for transmitting and receiving a UL signal. Information on a configuration of a PUCCH such as a PUCCH cell timing pattern (PUCCH configuration information) may be indicated to terminal 20 by RRC.

### <Configuration of Terminal>

FIG. 13 is a block diagram illustrating an exemplary configuration of terminal 20 according to the present embodiment. Terminal 20 includes, for example, reception section 201, transmission section 202, and control section 203. Terminal 20 communicates with base station 10 by radio, for example.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

The UL signal may include, for example, an uplink data signal and control information (e.g., UCI). The UL signal may include information on the processing capability of terminal 20 (e.g., UE capability), for example. The UL signal may also include a reference signal.

A channel used for transmitting the UL signal includes, for example, a data channel and a control channel. For example, the data channel includes a physical uplink shared channel (PUSCH), and the control channel includes a physical uplink control channel (PUCCH). Terminal 20 receives control information using the PUCCH from base station 10, and transmits the uplink data signal using the PUSCH, for example.

The reference signal included in the UL signal may include at least one of a DMRS, a PTRS, a CSI-RS, an SRS, and a PRS, for example. The reference signal such as the DMRS and PTRS is used for demodulation of the uplink data signal, and transmitted using an uplink channel (e.g., PUSCH), for example.

Control section 203 controls a communication operation of terminal 20 including reception processing in reception section 201 and transmission processing in transmission section 202.

For example, control section 203 acquires information such as data and control information from a higher layer, and outputs the information to transmission section 202. Control section 203 also outputs, for example, data, control information, and the like received from reception section 201 to the higher layer.

For example, control section 203 controls transmission of information to be fed back to base station 10. The information to be fed back to base station 10 may include, for example, HARQ-ACK, channel state information (SCI), or scheduling request (SR). The information to be fed back to base station 10 may be included in UCI. The UCI is transmitted using a resource of the PUCCH.

Control section 203 configures a PUCCH resource based on the configuration information received from base station 10 (e.g., configuration information such as a PUCCH cell timing pattern indicated by RRC and/or DCI). Control section 203 determines a PUCCH resource to be used for transmitting the information to be fed back to base station 10. Transmission section 202 transmits, under the control of control section 203, the information to be fed back to base station 10 using the PUCCH resource determined by control section 203.

Note that a channel used for DL signal transmission and a channel used for UL signal transmission are not limited to the examples described above. For example, the channel used for DL signal transmission and the channel used for UL signal transmission may include a random access channel (RACH) and a physical broadcast channel (PBCH). The RACH may be used for transmitting downlink control information (DCI) including a random access radio network temporary identifier (RA-RNTI).

Reception section 203 may receive a control signal. The control signal may be, for example, a signal controlling the switch of PUCCH carriers such as DCI, MAC CE, and/or RRC. The control signal may also be, for example, a signal controlling PUCCH repetition such as DCI, MAC CE, and/or RRC.

Control section 203 may control (determine) the switch of carriers transmitting an uplink control signal and repetition of an uplink control signal based on the control signal received by reception section 203. The uplink control signal may be PUCCH, for example. The switch of carriers may be semi-static carrier switch or dynamic carrier switch, for example. The repetition may be a slot-based repetition, sub slot-based repetition, or dynamic repetition. To be more specific, the repetition may be a slot-based PUCCH repetition, sub slot-based PUCCH repetition, or dynamic PUCCH repetition.

Control section 203 need not assume that both the switch of uplink control signal carriers and the repetition of an uplink control signal are performed at the same time. Control section 203 may assume that both the switch of uplink control signal carriers and the repetition of an uplink control signal are performed at the same time.

The above-described configuration allows terminal 20 to operate appropriately in a radio system allowing for PUCCH repetition and carrier switch.

The present disclosure has been described, thus far.

### <Hardware Configuration and the like>

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

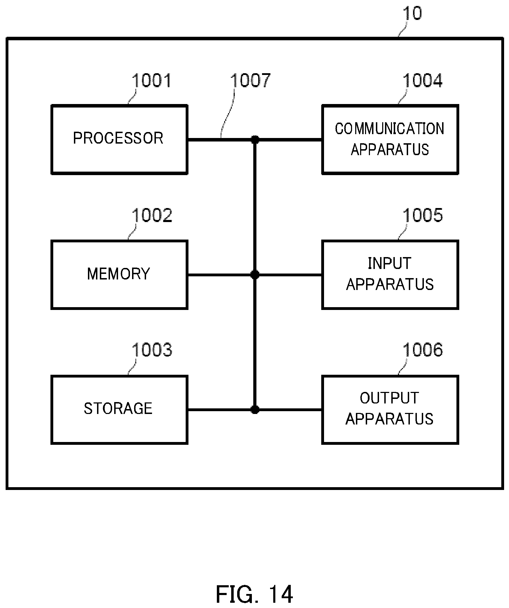

For example, a base station, a terminal, and the like according to an embodiment of the present disclosure may function as a computer that executes processing of a wireless communication method of the present disclosure. FIG. 14 illustrates an exemplary hardware configuration of the base station and the terminal according to the present embodiment. Physically, base station 10 and terminal 20 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of base station 10 and of terminal 20 may include one apparatus or a plurality of apparatuses illustrated in the drawings or may not include part of the apparatuses.

The functions of base station 10 and terminal 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103 and control section 203 and the like as described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 203 of terminal 20 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, transmission section 202, and the like as described above may be implemented using communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) that makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, base station 10 and terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### <Notification of Information and Signaling>

The notification of information is not limited to the embodiments described in the present disclosure, and the information may be notified by another method. For example, the notification of information may be performed out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### <Application System>

The embodiments described in the present specification may be applied to at least one of systems using Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with a user terminal in a network constituted by one network node or a plurality of network nodes including a base station can be obviously performed by at least one of the base station and a network node other than the base station (examples include, but not limited to, MME or S-GW). Although there is one network node in addition to the base station in the case illustrated above, a plurality of other network nodes may be combined (for example, MME and S-GW).

### <Direction of Input and Output>

The information and the like (see "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like ofAspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a radio technique (e.g., an infrared ray and a microwave), the at least one of the wired technique and the radio technique is included in the definition of the transmission medium.

### information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <System and Network>

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### <Base Station>

The terms "Base Station (BS)", "radio base station", "fixed station", "NodeB", "eNodeB (eNB)", " g NodeB (gNB)", "access point", "transmission point", "reception point", "transmission/reception point", "cell", "sector", "cell group", "carrier", and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Mobile Station>

The terms "Mobile Station (MS)", "user terminal", "User Equipment (UE)", and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of Things (IoT) equipment such as a sensor.

The base station in the present disclosure may also be replaced with the terminal. For example, the embodiments of the present disclosure may find application in a configuration that results from replacing communication between the base station and the terminal with communication between multiple terminals (such communication may, for example, be referred to as device-to-device (D2D), vehicle-to-everything (V2X), or the like). In this case, terminal 20 may be configured to have the functions that base station 10 described above has. The wordings "uplink" and "downlink" may be replaced with a corresponding wording for inter-equipment communication (for example, "side"). For example, an uplink channel, a downlink channel, and the like may be replaced with a side channel.

Similarly, the terminal in the present disclosure may be replaced with the base station. In this case, base station 10 is configured to have the functions that terminal 20 described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming", "expecting", "considering", and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

### <Reference Signal>

The reference signal can also be abbreviated as an RS and may also be called as a pilot depending on the applied standard.

### <Meaning of "Based on">

The description "based on" used in the present disclosure does not mean "based only on", unless otherwise specified. In other words, the description "based on" means both of "based only on" and "based at least on".

### <"First" and "Second">

Any reference to elements by using the terms "first", "second", and the like used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <Means>

The "means" in the configuration of each apparatus may be replaced with "section", "circuit", "device", or the like.

### <Open Form>

In a case where terms "include", "including", and their modifications are used in the present disclosure, these terms are intended to be inclusive like the term "comprising". Further, the term "or" used in the present disclosure is not intended to be an exclusive "or".

### <Time Unit such as TTI, Frequency Unit such as RB, and Radio Frame Configuration>

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on the basis of TTI to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be constant regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell", "carrier", and the like in the present disclosure may be replaced with "BWP".

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

"The maximum transmit power" described in the present disclosure may mean a maximum value of the transmit power, the nominal UE maximum transmit power, or the rated UE maximum transmit power.

### <Article>

In a case where articles, such as "a", "an", and "the" in English, for example, are added in the present disclosure by translation, nouns following these articles may have the same meaning as used in the plural.

### <"Different">

In the present disclosure, the expression "A and B are different" may mean that "A and B are different from each other". Note that, the expression may also mean that "A and B are different from C". The expressions "separated" and "coupled" may also be interpreted in the same manner as the expression "A and B are different".

### Industrial Applicability

An aspect of the present disclosure is useful for radio communication systems.

### Reference Signs List

10 Base station
20 Terminal
101, 202 Transmission section
102, 201 Reception section
103, 203 Control section

## Claims

1. A terminal, comprising:
a reception section that receives a first downlink signal and a second downlink signal that is retransmitted; and
a control section that controls transmission deferral of first acknowledgement to the first downlink signal and the first acknowledgement deferred in a relationship with second acknowledgement to the second downlink signal.

2. The terminal according to claim 1, wherein,
the first downlink signal is generated based on a semi-persistent scheduling (SPS) configuration, and
the control section does not simultaneously assume that the transmission deferral of the first acknowledgement is enabled in any of the SPS configuration and that triggering of the second acknowledgement is enabled for any format of a downlink control signal.

3. The terminal according to claim 1, wherein, when a transmission slot of the first acknowledgement that is deferred is identical to a transmission slot of the second acknowledgement, the control section assumes that multiplexing of the first acknowledgement that is deferred and the second acknowledgement is performed and both the multiplexing and deferral of acknowledgement are performed simultaneously.

4. The terminal according to claim 2 or 3, wherein the second acknowledgement is a hybrid automatic repeat request-acknowledgement (HARQ-ACK) bit in an enhanced Type 3 HARQ-ACK codebook.

5. The terminal according to claim 2 or 3, wherein the second acknowledgement is a hybrid automatic repeat request-acknowledgement (HARQ-ACK) bit based on one-shot triggering HARQ-ACK retransmission.

6. A radio communication method, comprising:
receiving, by a terminal, a first downlink signal and a second downlink signal that is retransmitted; and
controlling, by the terminal, transmission deferral of first acknowledgement to the first downlink signal and the first acknowledgement deferred in a relationship with second acknowledgement to the second downlink signal.
